# EUROPÄISCHE PATENTSCHRIFT

(11) **EP 2 670 999 B1**
(45) Veröffentlichungstag und Bekanntmachung des Hinweises auf die Patenterteilung: **08.05.2019**
(21) Anmeldenummer: 12716180.0
(22) Anmeldetag: 12.01.2012
(51) Int. Cl.: F16D 69/00, F16D 13/72

(54) **REIBMATERIAL**
FRICTION MATERIAL
MATIÈRE ANTI-FRICTION

(30) Priorität: 13.01.2011 AT 412011
(43) Veröffentlichungstag der Anmeldung: 11.12.2013
(73) Patentinhaber: Miba Frictec GmbH, 4663 Laakirchen (AT)
(72) Erfinder: FÖGE, Volker, A-4820 Bad Ischl (AT); EDER, Manuel, A-4841 Timelkam (AT)
(74) Vertreter: Burger, Hannes
(86) Internationale Anmeldenummer: PCT/AT2012/050006
(87) Internationale Veröffentlichungsnummer: WO 2012/094691

(56) Entgegenhaltungen:
- EP-B1- 1 991 646
- WO-A1-2007/043961
- DE-A1- 2 940 124

## Beschreibung

Die Erfindung betrifft die Verwendung eines Reibelements, umfassend einen Grundkörper mit einer Reibschicht, sowie eine Reibbaugruppe umfassend zumindest zwei Reibelemente, die mit einander in Wirkverbindung bringbar sind und die mit einem wasserbasierenden Schmiermittel geschmiert sind.

Derzeit werden in nasslaufenden Mehrscheiben-Lamellenkupplungen bzw. Bremsen unterschiedliche Reibmaterialien in Verbindung mit mineralölbasierten bzw. synthetischen Öle zur Kühlung der Reibflächen verwendet. Hierbei herrscht ein hoher technischer Standard vor, bei dem die Reibmaterialien, die Öle oder zumeist beide Komponenten sehr spezifisch auf die jeweilige Anwendung maßgeschneidert sind. Weiterentwicklungen in Richtung alternativer Schmierstoffe sind eher die Ausnahme, während auf Öl basierte Schmiermittel, bei denen das Potential zum Teil schon ausgeschöpft ist, mit großem Aufwand und hohen Kosten immer stärker additiviert werden, und diese zumeist mit negativen Auswirkungen auf die bereits systembedingte schlechte Umweltverträglichkeit. Als zusätzlicher negativer Begleiteffekt der auf Öl basierenden Schmiermittel kommt die starke Abhängigkeit von der Erdölindustrie zum Tragen.

Im Stand der Technik wurden aber auch bereits wasserbasierte Schmiersysteme beschrieben. So beschreibt z.B. die US 4,828,089 A eine Bremse bzw. eine Kupplung mit einem pyrolytisch hergestellten Karbonreibmaterial, das direkt mit Wasser oder einer Glykol-WasserLösung gekühlt wird.

Prinzipiell erwähnt wird Wasser als Fluid für nasslaufende Reibanwendungen auch in der EP 0 823 565 A2, wobei dies aber nicht vertieft wird und die darin zu finden Beispiele ölgeschmierte Systeme sind.

Aus der EP 1 991 646 B1 ist ein Getriebe bekannt, das eine Mischung aus Wasser und einem Glykol oder dergleichen, in der Graphitteilchen suspendiert sind, enthält. Vorzugsweise enthält die Mischung 40 bis 60 Gewichtsprozent des Glykols und 2 bis 25 Gewichtsprozent Graphit in Form flockiger Graphitteilchen mit einer Korngrösse unter 12 µm, Rest Wasser und weitere Beimengungen und/oder Zusätze.

Aus der DE 197 36 188 C2 und der DE 29 40 124 A1 sind Reibelemente mit grob strukturierter Oberfläche bekannt.

Die Aufgabe vorliegender Erfindung bestand in der Verbesserung einer Einfach- oder Mehrfachsynchronistion oder in eines Verteilergetriebes.

Diese Aufgabe wird durch eine Reibbaugruppe nach Anspruch 1 und die Verwendung eines Reibelements nach Anspruch 15 gelöst.

Überraschenderweise stellte sich während der Erprobung des in der EP 1 991 646 B1 beschriebenen Schmier- und Kühlmittels - die EP 1 991 646 B1 bildet im Umfang der Zusammensetzung dieses Schmier- und Kühlmittels einen Teil der Offenbarung gegenständlicher Bescheibung - für Reibanwendungen heraus, dass das wasserbasierende Schmier- und Kühlmittel nicht nur die zu erwartende Wirkung als Schmier- und Kühlmittel hat, sondern dass dieses wesentliche Vorteile bei Kupplungen und in Synchronisationen durch stark verringerte Leistungsverluste des Motors bei offener Stellung mit Differenzdrehzahl und durch das höhere übertragbare Reibmoment in der geschlossenen Stellung hat. Darüber hinaus stellte sich heraus, dass, obwohl die EP-B1 nahelegt, dass konstruktive Änderungen nicht erforderlich sind, eine weitere Verbesserung erreicht wird, wenn die voranstehend genannten Parameter der Oberflächengestaltung der Reibschicht eingehalten werden, also die Reibschicht eine stark strukturierte Oberfläche aufweist. Begründet wird dies damit, dass durch diese grob strukturierte Oberfläche Festschmierstoffpartikel, die in dem Schmier- und Kühlmittel enthalten sind, in die Oberfläche der Reibschicht eingelagert werden können, wodurch die Haftreibung aufgrund der Adhäsionswirkung des Wassers an der Reibschicht verringert werden kann.

Überraschend ist dabei, dass durch die grob strukturierte Oberfläche zwar die Kontaktfläche zur Gegenreibfläche verringert wird, trotzdem aber voranstehend genannte Verbesserung in der geschlossenen Stellung erreicht wird.

Obwohl es im Rahmen prinzipiell möglich ist, dass die Reibschicht aus dem Grundkörper des Reibelements gebildet wird, beispielsweise indem das Reibelement nach einem Sinterverfahren hergestellt wird und die Oberflächenstrukturierung durch ein entsprechend geformte Oberfläche der Pressform oder in einem nachfolgenden Kalibrierschritt mit einer die entsprechend geformte Oberfläche aufweisenden Kalibriermatrize hergestellt wird, ist die Reibschicht vorzugsweise durch einen Reibbelag gebildet, da die Oberflächengestaltung der Reibbeläge, insbesondere wenn diese ein gewebtes oder ungewebtes Fasermaterial aufweisen, aufgrund der höhreren Elastizität dieser Werkstoffe einfacher und kostengünstiger zu gestalten ist. Doch selbst wenn die Reibbeläge aus einer metallischen Beschichtung des Grundkörpers bestehen, wird damit der Vorteil erreicht, dass der Grundkörper an sich unverändert bleiben kann, somit also bisher üblicherweise verwendete Grundkörper weiterhin verwendet werden können.

Vorzugsweise weist die Reibschicht einen Reibwert gegen Stahl unter Benetzung mit einem Wasser/Glykol-Gemisch auf, der ausgewählt ist aus einem Bereich mit einer unteren Grenze von 0,06 ± 10 % und einer oberen Grenze von 0,4 ± 10 %. Mit anderen Worten ausgedrückt, weist die Reibschicht vorzugsweise einerseites einen relativ hohen Reibwert auf, andererseits einen Reibwert, der nur geringfügig schwankt, sodass das hohe Niveau des Reibwertes in engen Grenzen annähernd konstant ist. Es wird damit erreicht, dass die Kontaktfläche der Reibschicht be zumindest annähernd gleich bleibender Reibleistung weiter verringert werden kann, sodass die Reibschicht eine noch gröbere Strukturierung zur Einlagerung von Festschmierstoffpartikel aufweisen kann.

Gemäß einer anderen Ausführungsvariante ist vorgesehen, dass die Reibschicht einen Reibwert aufweist, der von Temperaturschwankungen und/oder Druckschwankungen (spezifischer Druck verursacht durch die Schaltkraft) und/oder Drehzahlschwankungen um maximal ± 10 % beeinflusst wird. Es wird damit vermieden, dass der Reibwert der Reibschicht infolge von Änderungen der Umfeldingungen - üblicherweise sinkt der Reibwert mit zunehmender Temperatur - verringert wird. Infolgedessen wird damit wiederum der Vorteil erreicht, dass die Kontaktfläche der Reibschicht in Bezug auf die gesamte Oberfläche der Reibschicht relativ klein ausgebildet werden kann. Zudem wird durch die relative Unabhängigkeit des Reibwertes von Druckschwankungen und Drehzahlschwankungen eine Unabhängkeit der Reibleistung vom Fahrerverhalten erreicht.

Insbesondere ist gemäß einer Ausführungsvariante dazu vorgesen, dass der Reibwert innerhalb einer Schwankungsbreite von 0,01 bis 0,1 (bezogen auf den Reibwert) unabhängig ist von von Temperaturschwankungen und/oder Druckschwankungen und/oder Drehzahlschwankungen.

Von Vorteil in Hinblick auf die Reduktion der Kontaktfläche der Reibschicht ist es, wenn die Reibschicht einen Verschleiß nach 20.000 Schaltzyklen von maximal 50 µm aufweist, da damit eine hohe Standzeit des Reibelementes auch bei reduzierter, wirksamer Reibfläche erreicht wird, bzw. bei im Vergleich zu Stand der Technik Reibelementen die Kontaktfläche bei gleichbleibender Reibleistung reduziert werden kann.

Es kann Weiters vorgesehen werden, dass die Reibschicht eine Kompressibilität aufweist, die ausgewählt ist aus einem Bereich mit einer unteren Grenze von 5 % und einer oberen Grenze von 50 %. Durch die Einhaltung des Elastizitätwertes der Reibschicht innerhalb dieses Bereichs wird erreicht, dass adhäsiv an der Oberfläche der Reibschicht gebundenes Wasser unter Belastung der Reibschicht im Zusammenwirken mit den in der Reibschicht eingelagerten Festschierstoffpartikeln besser ausgequetscht wird.

Dabei ist es von Vorteil, wenn zur weiteren Verbesserung dieses Effektes die Reibschicht ein freies Volumen von zumindest 20 % aufweist.

Die Poren der Reibschicht können eine Porengröße aufweisen, die ausgewählt ist aus einem Bereich mit einer unteren Grenze von 20 µm und einer oberen Grenze von 900 µm, wodurch die Einlagerung von Festschmierstoffpartikel in diese Poren ermöglicht wird und gleichzeitig verhindert werden kann, dass sich Wasser in diesen Poren ansammelt bzw. der Wassergehalt in den Poren reduziert werden kann.

Von Vorteil ist es, wenn die Reibschicht einen Festschmierstoffanteil, insbesondere einen Graphitanteil, von mindestens 5 Gew.-% aufweist, da festgestellt werden konnte, dass mit Festschmierstoffanteilen unterhalb dieses Wertes zwar eine Reibleistung der Reibschicht erzielt werden kann, die den Anforderungen gerecht wird, jedoch mit einem Festschmierstoffanteil ab 5 Gew.-% die Reibleistung überpropotional steigt. Durch den bereits vorhandenen Festschmierstoffanteil in der Reibschicht kann die Adhäsion von Wasser an dem Reibbelag reduziert werden.

Dabei ist es von Vorteil, wenn der Festschmierstoffanteil des Reibbelages ausgewählt ist aus einem Bereich mit einer unteren Grenze von 5 Gew.-% und einer oberen Grenze von 50 Gew.-%, da oberhalb des Wertes von 50 Gew.-% die Reibleistung der Reibschicht zwar noch steigt, allerdings nicht im erwartetem Ausmaß.

Die Festschmierstoffpartikel im Reibbelag weisen bevorzugt eine maximale Korngröße von 500 µm auf. Mit maximaler Korngröße ist dabei die größte Abmessung der Partikel gemeint, unabhängig davon ob Festschmierstoffpartikel mit Plättchenstruktur verwendet werden oder nicht. Mit anderen Worten ausgedrückt ist dieser Wert nicht auf eine bestimmte Raumrichtung beschränkt. Es wird damit eine Verbesserung der Einlagerung der Festschmierstoffpartikel in die Reibschicht, insbesondere in die Poren der Reibschicht erreicht, insbesondere kann damit der Anteil der Partikel sowie die Schichtung der Partikel in der Reibschicht verbessert werden.

Um diese Effekte zu verbessern ist vorgesehen, dass die Festschmierstoffpartikel Festschmierstoffkörner mit einer Korngrößenverteilung in einem Bereich von 0,01 µm bis 50 µm aufweisen.

Vorzugsweise weist der Reibbelag einen Harzanteil auf, der ausgewählt ist aus einem Bereich mit einer unteren Grenze von 15 Gew.-% und einer oberen Grenze von 60 Gew.-%. Unterhalb von 15 Gew.-% Harz wird der Reibbelag zu weich, sodass dieser eine Elastizität aufweist, die - wie sich im Zuge von Untersuchungen herausstellte - für die Verwendung eines Wasser enthaltenden Schmier- und Kühlmittels zu groß ist. Oberhalb von 60 Gew.-% Harz reicht die Elastizität nicht mehr aus, um im bzw. am Reibbelag adhäsiv gebundenes Wasser während der Reibbeanspruchung des Reibelementes sicher aus dem Reibbelag zumindest großteils zu entfernen. Darüber hinaus nimmt mit einem Harzanteil von über 60 Gew.-% die Porosität des Reibbelages auf einen Wert ab, der nicht mehr ausreichend ist, um eine genügend große Menge an Festschmierstoffpartikel aus dem Schmier- und Kühlmittel einzulagern.

In der bevorzugten Ausführung des Reibbelages weist dieser eine Karbonfasermatrix auf, da damit der Reibbelag von seinen Grundeigenschaften bereits eine geringere Adhäsionsneigung zu Wasser hat.

Dabei weist der Reibbelag aus diesem Grund zur weiteren Verbesserung der Eigenschaften des Reibbelages bevorzugt einen Karbonanteil auf, der ausgewählt ist aus einem Bereich mit einer unteren Grenze von 30 Gew.-% und einer oberen Grenze von 85 Gew.-%.

Gemäß einer anderen Ausführungsvariante ist vorgesehen, dass die Reibschicht mit einer haftungsvemindernden Beschichtung versehen ist, wodurch der Effekt der veringerten Adhäsion des Wasser aus dem Schmier- und Kühlmittel an bwz. In der Reibschicht unterstützt bzw. verbessert werden kann.

In Hinblick auf die Verringerung der wirksamen Fläche desReibelementes, also der Kontaktfläche, ist es von Vorteil, wenn die haftungsvermindernde Beschichtung eine Härte nach Vickers von maximal HV(1) 400aufweist, da sich damit die Beschichtung im Bereich der Kontaktfläche während des Betriebes des Reibelementes abreibt, also keine Beeinträchtung der Wirkung des Reibelementes, d.h. der Reibschicht, vorhanden ist, allerdings die Beschichtung in den "Tälern" zwischen den "Spitzen" des Reibbelages nach wie vor vorhanden ist, und dort seine Wirkung zur Verrringerung der Adäsion des Wassers entfaltet.

In der bevorzugten Ausführung ist die haftungsvermindernde Beschichtung durch eine Silikonbeschichtung, eine DLC-Beschichtung, eine Chrom-Nitrit-Beschichtung oder eine Gleitlackbeschichtung gebildet, da diese einfach herzustellen sind, beispielsweise durch aufsprühen, und bei diesen Substanzen zudem keine negativen Auswirkung auf das im Schmier- bzw. Kühlmittel zu erwarten sind.

Aus voranstehenden Gründen, dass sich nämlich die Beschichtung teilweise im Betrieb abreiben soll, ist bevorzugt, wenn eine Schichtdicke der haftungsvermindernden Beschichtung maximal 6 µm beträgt. Zudem wird durch die Einhaltung dieser Grenze der Schichtdicke erreicht, dass die Einlagerung bzw. Anlagerung von Festschmierstoffpartikel aus dem Schmier- bzw. Kühlmittel nicht bzw. nicht wesentlich negativ beeinflusst wird.

Aus voranstehend genannten Gründen weist die Kontaktfläche, die in direktem Kontakt mit einem weiteren Reibelement in der Verwendung steht, eine Größe auf, die maximal 40 % der Gesamtfläche der Reibschicht beträgt.

Gemäß einer Ausführungsvariante der Reibbaugruppe ist vorgesehen, dass das weitere Reibelement einen arithmetischen Mittenrauwert Ra nach DIN EN ISO 4287 aufweist, der ausgewählt ist aus einem Bereich mit einer unteren Grenze von 4 µm, bevorzugt 5 µm, und einer oberen Grenze von 8 µm, bevorzugt 7 µm. Einerseits wird durch die Einhaltung der unteren Grenze die Verdrängung des Schmier- und Kühlmittels aus dem Reibbereich während der Reibbeanspruchung der beiden Reibelemente verbessert, andereseits kann durch die Einhaltung der oberen Grenze erreicht werden, dass eine hohe Reibleistung der Reibbaugruppe trotz geringer Kontaktfläche des ersten Reibelementes zur Verfügung gestellt werden kann, insbesondere keine bzw. nur eine geringe Abhängigkeit von der Angriffsfläche im zweiten Reibelement gegeben ist, also eine Verminderung der Reibleistung durch das Aufeinandertrefffen einer "Spitze" der Reibschicht des zweiten Reibelementes und eines "Tals" der Reibschicht des ersten Reibelementes, in dem die Festschmierstoffpartikel vorhanden sind, die eine Verringerung der Reibung bewirken würden, verhindert werden kann.

Bevorzugt weist das weitere Reibelement eine Oberflächenhärte auf, die ausgewählt ist aus einem Bereich mit einer unteren Grenze von HV(1) 180 und einer oberen Grenze von HV(1) 600, um damit die Kompressibilität der Reibschicht des weiteren Reibelementes zu verringern, wodurch die Reibleistung auch bei der geringen Kontaktfläche des ersten Reibelementes verbessert werden kann.

Zu diesem Zweck kann auch vorgesehen sein, dass das weitere Reibelement mit einer Hartschicht mit einer Härte nach Vickers von mindestens HV(1) 400 versehen ist.

Zum besseren Verständnis der Erfindung wird diese anhand der nachfolgenden Figuren näher erläutert.

Es zeigen teilweise in schematisch vereinfachter Darstellung:
- Fig. 1: ein Reibelement;
- Fig. 2: ein Abbild der Oberflächenstruktur eines Ausschnittes der Reibschicht eines Reibelementes;
- Fig. 3: das Rauheitsprofil der Oberflächenstruktur nach Fig. 2.

Einführend sei festgehalten, dass die in der Beschreibung gewählten Lageangaben, wie z.B. oben, unten, seitlich usw. auf die unmittelbar beschriebene sowie dargestellte Figur bezogen sind und bei einer Lageänderung sinngemäß auf die neue Lage zu übertragen sind. Weiters können auch Einzelmerkmale oder Merkmalskombinationen aus den gezeigten und beschriebenen unterschiedlichen Ausführungsbeispielen für sich eigenständige Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

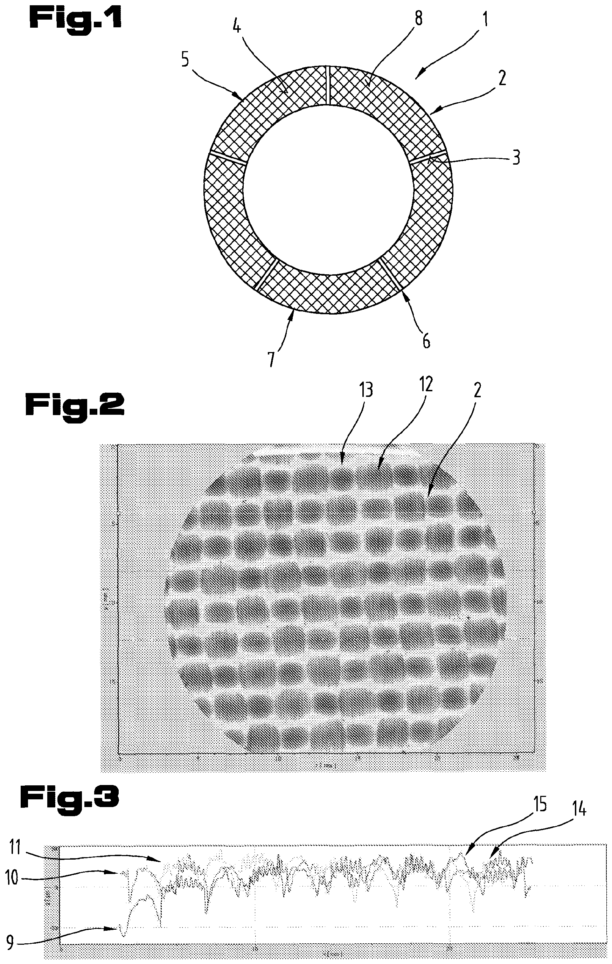

Fig. 1 zeigt ein Reibelement 1 in Form einer so genannten Reiblamelle.

Prinzipiell sind derartige Reiblamellen aus dem Stand der Technik bekannt. Die in Fig. 1 dargestellte Form steht nur stellvertretend für unterschiedlichste Ausführungsformen der Geometrie, die sich nach dem jeweiligen Anwendungsfall richten. Da dies dem Fachmann bekannt ist, sei dazu an die einschlägige Literatur verwiesen.

Des Weiteren kann das Reibelement 1 auch ein Synchronring oder ein Doppelkonussynchronring sein.

Die Reibelemente 1, also beispielsweise Reiblamellen, werden beispielsweise für Einfach- und Mehrfach-Synchronisationen, ungeregelte und geregelte Verteilergetriebe, Bremsen, Kupplungen, Differenzialsperren, Torque Vectoring Anwendungen, etc. verwendet. Dazu wird das Reibelement 1 mit einem weiteren Reibelement so angeordnet, dass während der Betätigung der jeweiligen Vorrichtung das Reibelement 1 mit dem weiteren Reibelement in Reibschluss gelangt. Die Anzahl der Reibelemente 1 und der weiteren Reibelemente - die gegebenenfalls auch durch die Reibelemente 1 gebildet sein können, normalerweise aber stofflich anders ausgeführt sind als die Reibelemente 1 - ist dabei nicht auf zwei beschränkt, sondern richtet sich nach der Reibleistung, die gewünscht ist. Beispielsweise können pro Paket drei, vier, fünf, sechs, sieben, acht, neun, zehn bis zwanzig, etc. Reibelemente miteinander kombiniert zu einer Reibbaugruppe, also beispielsweise einem so genannten Lamellenpaket, kombiniert sein.

Unter Torque Vectoring Anwendungen versteht man bspw. Anwendungen in der Fahrdynamik bei denen bspw. Drehzahlunterschiede eines Sperrdifferenzials durch dieses System vergrößert werden. Man kann damit bspw. die Lenkung eines Fahrzeuges unterstützen, in dem die Antriebsmomente ungleich auf die Räder verteilt werden. Dadurch kann ein höheres Moment zum kurvenäußeren Rad gelenkt werden, sodass bei normalen Fahrbedingungen ein übersteuerndes Verhalten eingestellt werden kann.

In der bevorzugten Form der Erfindung wird das Reibelement 1 in Einfach- und Mehrfach-Synchronisationen sowie in ungeregelten und geregelten Verteilergetrieben eingesetzt.

Das Reibelement 1 weist einen Grundkörper 2 auf, der auf einer vorderen und/oder hinteren Oberfläche 3, 4, also auf zumindest einer dieser Oberflächen3, 4, mit einer Reibschicht 5 versehen ist. Die Reibschicht 5 kann sich durchgängig über den Umfang des Grundkörpers 2 erstrecken oder nur partiell darauf angeordnet sein, beispielsweise indem die Reibschicht 5 durch Nuten 6 in Segmente 7 unterteilt ist, wobei diese Nuten 6 auch in der Reibschicht 5 selbst ausgebildet sein können. Die Anzahl der Segmente 7 oder der Nuten 6 richtet sich dabei wiederum nach dem jeweiligen Anwendungsfall. Dementsprechend ist die dargestellte Anzahl nicht beschränkend zu sehen. Im Wesentlichen bildet also die Reibschicht 5 eine Kreisring bzw. einen durch die Nuten 6 unterbrochenen Kreisring, wobei auch andere als die kreisringförmige geometrische Ausgestaltung möglich sind.

Der Grundkörper 2 selbst kann aus einem Vollmaterial oder aus einem Sintermaterial bestehen. Beispielsweise ist der Grundkörper 2 aus einem Stahl oder einem Sinterstahl hergestellt, wobei auch andere Metalle oder Metalllegierungen, wie z.B. Messinge, etc. eingesetzt werden können.

Die Reibschicht 5 kann entweder aus dem Werkstoff des Grundkörpers 2 gefertigt sein, bevorzugt wird jedoch ein gesonderter Reibbelag auf den Grundkörper 2 aufgebracht und mit diesem verbunden. Beispielsweise kann der Reibbelag aus einer metallischen Beschichtung, wie z.B. (Sinter)Bronzen, Eisen-, Kupfer-, Nickellegierungen, einer nichtmetallischen, insbesondere anorganischen, Beschichtung, wie z.B. Keramik aus Al₂O₃ oder SiO₂, und/oder aus einer organischen Beschichtung, gegebenenfalls auf einem Träger, insbesondere Papier, hergestellt sein. Die organische Beschichtung kann durch ein Harz oder ein Harzgemisch gebildet sein, beispielsweise ein Phenolharz, ein Melaminharz, ein Amidharz, ein Amid-Imid-harz, ein Epoxidharz, Silikonharz, sowie Mischungen daraus, wobei bevorzugt ein Phenolharz(gemisch) verwendet wird. Vorzugsweise ist das Harz faserverstärkt, beispielsweise mit Glasfasern, mineralischen Fasern, wie z.B. Basaltfasern, oder insbesondere mit Karbonfasern. Werden Beschichtungen als Reibbeläge auf dem Grundkörper 2 verwendet, können diese direkt aufgebracht sein, beispielsweise in Fall von metallischen Beschichtungen, oder mit einem Kleber damit verbunden sein, beispielsweise im Fall von Papierbelägen oder anderen harzgetränkten Belägen. Gegebenenfalls können in der Reibschicht 5 bzw. dem Reibbelag auch Reibpartikel, wie z. B. Al₂O₃ oder SiO₂, etc., und/oder Festschmierstoffpartikel, wie z.B. Graphit, MoS₂, hexagonales BN, PTFE, etc. enthalten sein.

Der Harzanteil des Reibbelages kann ausgewählt sein aus einem Bereich mit einer unteren Grenze von 15 Gew.-% und einer oberen Grenze von 60 Gew.-%, insbesondere aus einem Bereich mit einer unteren Grenze von 25 Gew.-% und einer oberen Grenze von 50 Gew.-%, vorzugsweise aus einem Bereich mit einer unteren Grenze von 25 Gew.-% und einer oberen Grenze von 40 Gew.-%.

Der Karbonanteil des Reibbelages kann ausgewählt sein aus einem Bereich mit einer unteren Grenze von 1 Gew.-% und einer oberen Grenze von 85 Gew.-%, insbesondere aus einem Bereich mit einer unteren Grenze von 10 Gew.-% und einer oberen Grenze von 70 Gew.-%, vorzugsweise aus einem Bereich mit einer unteren Grenze von 30 Gew.-% und einer oberen Grenze von 50 Gew.-%.

Wie bereits voranstehend ausgeführt, wird das Reibelement 1 in so genannten Nassanwendung verwendet, wobei als Schmier- und Kühlmittel ein Wasser enthaltendes bzw. wasserbasierendes Gemisch verwendet wird. Insbesondere wird ein Schmier- und Kühlmittel verwendet, das in der EP 1 991 646 B1 beschrieben ist und das eine Mischung aus Wasser und zumindest einem aliphatischen Kohlenwasserstoff mit mindestens zwei Hydroxylgruppen, in der Graphitteilchen mit einer Korngröße von maximal 50 µm dispergiert sind, als Hauptkomponenten umfasst. Anstelle von Graphit können auch andere Festschmierstoffpartikel eingesetzt werden, gegebenenfalls in Kombination untereinander oder mit Graphit, wie z.B. MoS₂, hexagonales BN, PTFE, etc. Der Anteil des aliphatischen Kohlenwasserstoffes an dem Schmier- und Kühlmittel kann zwischen 25 Gew.-% und 75 Gew.-%, insbesondere zwischen 40 Gew.-% und 60 Gew.-%, der Anteil der Festschmierstoffpartikel zwischen 1 Gew.-% und 30 Gew.-%, insbesondere zwischen 2 Gew.-% und 25 Gew.-%, betragen. Den Rest auf 100 Gew.-% bilden das Wasser und gegebenenfalls zugemischte Hilfsstoffe und Additive, wie z.B. ein oder mehrere Dispergieradditive, ein oder mehrere Entschäumer, ein oder mehrere Korrosionsinhibitoren, etc. Der Gesamtanteil an diesen Hilfsstoffen und Additiven beträgt maximal 10 Gew.-% , insbesondere maximal 8 Gew.-%, vorzugsweise maximal 5 Gew.-%. Als aliphatischer Kohlenwasserstoff wird bevorzugt ein Glykol oder ein Glykolgemisch verwendet mit 2 bis 10 Kohlenwasserstoffen, wie z.B. Ethylenglykol, Propylenglykol, Triethylenglykol, oder deren Polymere, wie z.B. Polyethylenglykol. In der bevorzugten Ausführung ist der aliphatische Kohlenwasserstoff in Wasser löslich.

Erfindungsgemäß ist eine Oberfläche 8 der Reibschicht 5, also insbesondere des Reibbelags, stark strukturiert ausgeführt. Dazu zeigen die Fig. 2 und 3 ein Beispiel für eine derartig strukturierte Oberfläche 8. Die Fig. 2 zeigt dabei eine so genannte Reliefaufnahme, mit der über die Schattenlänge der Schatten von den Oberflächenunebenheiten auf das Höhenprofil geschlossen werden kann, Fig. 3 gibt dazu das Rauhigkeitsprofil dieses Oberflächenbereiches wieder, wobei eine Linie 9, eine Linie 10 und eine Linie 11 jeweils unterschiedliche Topographielinien der Oberfläche zeigen.

Die Aufnahme wurde von einem Reibbelag der Zusammensetzung 25 Gew.-% Harz und 75 Gew.-% Carbonfasern erstellt.

Wie deutlich aus Fig. 2 ersichtlich ist, weist die Oberfläche eine "Webstruktur" auf mit erhöhten Bereichen 12 und vertieften Bereichen 13. Das Rauhigkeitsprofil nach Fig. 3 zeigt demnach Wellentäler 14 und Spitzen 15. Im konkreten wurde für diesen Reibbelag ein arithmetischer Mittenrauwert Ra nach DIN EN ISO 4287 von 4,379 µm, eine Wellentiefe Wt nach DIN EN ISO 4287 von 48,14 µm und eine mittlere Rillenbreite RSm nach DIN EN ISO 4287 von mindestens 332,8 µm gemessen.

Generell weist die Reibschicht 5 nach der Erfindung einen arithmetischen Mittenrauwert Ra nach DIN EN ISO 4287 von mindestens 3 µm, eine Wellentiefe Wt nach DIN EN ISO 4287 von mindestens 30 µm und eine mittlere Rillenbreite RSm nach DIN EN ISO 4287 von mindestens 150 µm auf. Insbesondere kann der arithmetischer Mittenrauwert Ra nach DIN EN ISO 4287 zwischen 3 µm und 10 µm und/oder der mittlere Wellentiefe Wt nach DIN EN ISO 4287 zwischen 30 µm und 700 µm und/oder die mittlere Rillenbreite RSm nach DIN EN ISO 4287 zwischen 150 µm und 3000 µm betragen.

Es wurden dazu auf einer Lamelle Reibbeläge mit unterschiedlicher Oberflächentopographie hergestellt und deren Reibverhalten in einer Reibbaugruppe mit einer Stahllamelle als Gegenlamelle unter Verwendung eines Wasser/Glykol/Grafit Gemisches untersucht. Die Ergebnisse sind in Tabelle 1 zusammengefasst. Die Untersuchungen wurden an Reibbelägen der Zusammensetzung 30 Gew.-% Harz und 70 Gew.-% Fasern der Zusammensetzung 20 Gew.-% Baumwollfasern, 17 Gew.-% Aramidfasern, 28 Gew.-% Celite, 15 Gew.-% Acrylfasern, 15 Gew.-% Karbonfasern und 5 Gew.-% Graphit, wobei sich letztere Angaben auf die Fasern an sich beziehen, (Beispiele 1 bis 5) bzw. an Reibbelägen der Zusammensetzung 30 Gew.-% Harz und 70 Gew.-% Carbonfasern (Beispiele 6 bis 8) durchgeführt. Generell kann die Zusammensetzung des Reibbelages ausgewählt werden aus 10 Gew.-% - 40 Gew.-% Baumwollfasern und/oder 5 Gew.-% - 35 Gew.-% Aramidfasern und/oder 5 Gew.-% - 65 Gew.-% Celite und/oder 5 Gew.-% - 25 Gew.-% Acrylfasern und/oder 5 Gew.-% - 25 Gew.-% Karbonfasern und/oder 5 Gew.-% - 65 Gew.-% Graphit. Die Abkürzung i.O. steht dabei für "in Ordnung" also einen positiven Befund, und die Abkürzung n.i.O. steht dabei für" nicht in Ordnung" also einen negativen Befund.

**Tabelle 1**

| Beispiel | Ra [µm] | Wt [µm] | RSm [µm] | Ergebnis |
|---|---|---|---|---|
| 1 | 3 | 250 | 1300 | i.O. |
| 2 | 1,5 | 250 | 1300 | n.i.O. |
| 3 | 3 | 500 | 2500 | i.O. |
| 4 | 5 | 500 | 2500 | i.O. |
| 5 | 5 | 750 | 3500 | n.i.O. |
| 6 | 4,5 | 50 | 330 | i.O. |
| 7 | 2,5 | 30 | 150 | i.O. |
| 8 | 1,5 | 20 | 100 | n.i.O. |

Die Struktur der Oberfläche der Reibschicht 5 kann erhalten bzw. eingestellt werden durch Rillierung, Nutierung, Pressen, die Dichte des Gewebes, die verwendete Gewebeart, mechanische Nachbearbeitung (Schleifen, Prägen), die Fasertextur (Strangbreite), etc. des Reibbelages.

Bevorzugt wird dabei, wenn die Kontaktfläche der Reibschicht 5, die in direktem Kontakt mit dem weiteren Reibelement während des Reibeingriffes steht, maximal 40 %, insbesondere maximal 30 %, der Gesamtfläche der Reibschicht 5 beträgt.

Gemäß einer Ausführungsvariante ist vorgesehen, dass die Reibschicht einen Reibwert gegen Stahl unter Benetzung mit dem voranstehend genannten Wasser/Glykol-Gemisch aufweist, der ausgewählt ist aus einem Bereich mit einer unteren Grenze von 0,06 ± 10 %, insbesondere 0,08 ± 10 %, und einer oberen Grenze von 0,4 ± 10 %, insbesondere 0,2 ± 10 %. Erreicht wird dies insbesondere durch die spezielle Oberflächenstruktur, durch Wechselwirkungen zwischen dem Fluid bzw. dessen Additive und dem Reibbelag, durch die, insbesondere oberflächliche, Einlagerung von Festschmiermittel in den Reibbelag, insbesondere Grafit, und durch geringe topographische Oberflächenänderungen über die Lebensdauer des Reibbelages bzw. des Reibelementes 1. Es wurden dazu Untersuchungen an den Reibbelägen entsprechend Tabelle 1 durchgeführt, wobei die Nummerierung in den folgenden Tabellen beibehalten wird. Die Ergebnisse sind in Tabelle 2 zusammengefasst.

**Tabelle 2**

| Beispiel | Reibwert | Ergebnis |
|---|---|---|
| 1 | 0,06 - 0,07 | i.O. |
| 2 | 0,039 - 0,051 | n.i.O. |
| 3 | 0,085 - 0,11 | i.O. |
| 4 | 0,09 - 0,13 | i.O. |
| 5 | 0,038 - 0,052 | n.i.O. |
| 6 | 0,08 - 0,09 | i.O. |
| 7 | 0,06 - 0,07 | i.O. |
| 8 | 0,04 - 0,05 | n.i.O. |

Es ist weiter bevorzugt, wenn die Reibschicht 5 einen Reibwert aufweist, der von Temperaturschwankungen und/oder Druckschwankungen und/oder Drehzahlschwankungen um maximal ± 10 % beeinflusst wird, vorzugsweise innerhalb einer Schwankungsbreite von 0,01 bis 0,1. Erreicht wird dies ebenfalls durch die im voranstehenden Absatz angegebenen Maßnahmen.

Des Weiteren soll die Reibschicht 5 einen Verschleiß nach 20.000 Schaltzyklen von maximal 50 µm aufweisen, insbesondere einen maximalen Verschleiß zwischen 5 µm und 50 µm, vorzugsweise 40 µm, wie dies Tabelle 3 zu entnehmen ist. Erreicht wird dies durch die spezielle Oberflächenstruktur und infolge von Wechselwirkungen zwischen dem Fluid bzw. dessen Additve und dem Reibbelag, insbesondere durch die oberflächliche Einlagerung von Festschmiermittel in den Reibbelag, insbesondere Grafit.

**Tabelle 3:**

| Beispiel | Verschleiß [µm] | Ergebnis |
|---|---|---|
| 1 | 5 - 15 | i.O. |
| 2 | 60 - 80 | n.i.O. |
| 3 | 10 - 20 | i.O. |
| 4 | 10 - 25 | i.O. |
| 5 | 60 - 80 | n.i.O. |
| 6 | 40 - 50 | i.O. |
| 7 | 15 - 30 | i.O. |

Des Weiteren wurde gefunden, dass es von Vorteil ist, wenn die Reibschicht eine Kompressibilität aufweist, die ausgewählt ist aus einem Bereich mit einer unteren Grenze von 5 %, insbesondere 10 %, und einer oberen Grenze von 50 %, insbesondere 45 %, wobei hier eine freies Volumen von zumindest 25 %, insbesondere zumindest 35 %, bezogen auf den gesamten Reibbelag, vorteilhaft ist, wie dies die Tabelle 4 zeigt. Erreicht wird dies durch die spezielle Oberflächenstruktur. (Das freie Volumen wird aus der maximalen Wasseraufnahme eines Reibbelages bis zu seiner Sättigung bestimmt).

Die Kompressibilität wird aus der Veränderung der Schichtdicke in mm bestimmt, die sich ergibt wenn ein definiertes Kupplungspaket bestehend aus einer definierten Anzahl an Fiber Composite Reiblamellen, beispielsweise neun, und immer denselben in ihrer Stückzahl definierten Stahlgegenlamellen, beispielsweise zehn, mit einem definierten Vorschub in mm/min bis zum Erreichen einer definierten axialen Prüfkraft in Newton, beispielsweise 20.000 N, gegebenenfalls bei einer Vorlast von 200 N, komprimiert wird. Es wird dazu eine Zug/Druck Prüfmaschine, z.B. von Zwick, verwendet. Die voranstehenden relativen Angaben der Kompressibilität nehmen dabei Bezug auf die ursprüngliche Schichtdicke des unbelasteten Reibbelages.

**Tabelle 4**

| Beispiel | Kompressibilität [%] | freies Volumen [%] | Porengröße [µm] | Ergebnis |
|---|---|---|---|---|
| 1 | 40 - 43 | 35 - 41 | 50 - 250 | i.O. |
| 2 | 10 - 15 | 20 - 27 | 10 - 170 | n.i.O. |
| 3 | 33 - 37 | 31 - 43 | 20 - 500 | i.O. |
| 4 | 46 - 50 | 41 - 48 | 100 - 750 | i.O. |
| 5 | 55 - 68 | 47 - 58 | 140 - 970 | n.i.O. |
| 6 | 10 - 15 | 38 - 42 | 35 - 95 | i.O. |
| 7 | 6 - 12 | 30 - 35 | 25 - 50 | i.O. |
| 8 | 3 - 8 | 25 - 33 | 20 - 40 | n.i.O. |

Es ist dabei von Vorteil, wenn die Poren der Reibschicht 5 eine Porengröße aufweisen, ausgewählt aus einem Bereich mit einer unteren Grenze von 20 µm, insbesondere 100 µm, und einer oberen Grenze von 900 µm, insbesondere 500 µm.

Obwohl in der verwendeten Schmier- und Kühlflüssigkeit bereits Festschmierstoffpartikel, insbesondere Graphit, enthalten sind, ist gemäß einer Ausführungsvariante vorgesehen, dass auch die Reibschicht 5 selbst bereits Festschmierstoffpartikel enthält, wie dies bereits ausgeführt wurde. Dabei kann der Reibbelag einen Festschmierstoffanteil, insbesondere einen Graphitanteil, von mindestens 5 Gew.-% aufweisen. Vorzugsweise ist der Festschmierstoffanteil des Reibbelages ausgewählt ist aus einem Bereich mit einer unteren Grenze von 5 Gew.-%, insbesondere 10 Gew.-%, und einer oberen Grenze von 50 Gew.-%, insbesondere 40 Gew.-%. In Tabelle 5 sind dazu einige ausgewählte Beispiele zu den Festschmierstoffanteilen im Reibbelag angeführt.

**Tabelle 5**

| Beispiel | Festschmierstoff | Anteil [Gew.-%] | Korngröße [µm] | Ergebnis |
|---|---|---|---|---|
| 1 | Graphit | 10 - 30 | 5 - 25 | i.O. |
| 2 | Celit | 5 - 8 | 2 - 15 | n.i.O. |
| 3 | Koks | 3 - 15 | 50 - 500 | i.O. |
| 4 | MoS₂ | 6 - 9 | | i.O. |
| 5 | Aktivkohle | 3 - 23 | 0,5 - 5 | i.O. |
| 6 | WS₂ | 3 - 5 | 50 - 200 | n.i.O. |

Wie der Tabelle 5 weiter zu entnehmen ist, haben die Festschmierstoffpartikel eine bevorzugte maximale Korngröße von 500 µm. Insbesondere weisen die Festschmierstoffpartikel Festschmierstoffkörner mit einer Korngrößenverteilung/Sieblinie in einem Bereich von 0,01 µm bis 50 µm, insbesondere von 8 µm bis 42 µm, auf.

Wie voranstehend ausgeführt, kann die Reibschicht 5 mit einer haftungsvermindernden Beschichtung versehen sein, die bevorzugt eine eine Härte nach Vickers von maximal HV(1) 400 aufweist. Es konnte damit bei einem Reibbelag entsprechend den Zusammensetzungen die zu Tabelle 1 beschrieben wurden, die Adhäsion von Wasser am Reibbelag um 30 % bis 40 % im Vergleich zu einem Reibbelag ohne diese Beschichtung verbessert werden. Es kann damit die Nutzungsdauer des Reibbelages verlängert werden.

In der bevorzugten Ausführung ist die haftungsvermindernde Beschichtung durch eine Silikonbeschichtung, eine DLC-Beschichtung, eine Chrom-Nitrit-Beschichtung, oder eine Gleitlackbeschichtung gebildet ist. Insbesondere wird ein Gleitlack bevorzugt, der ein Polyamidimid-Harz als Matrix aufweist. Gemäß einer besonders bevorzugten Ausführungsform des Reibelementes 5 enthält der Gleitlack ebenfalls partikelförmigen Graphit bzw. den Festschmierstoff, der auch im Schmier- und Kühlmittel enthalten ist, als Festschmierstoff, gegebenenfalls zusammen mit einem anderen partikulären Festschmierstoff, insbesondere MoS2.

Es wurde dabei festgestellt, dass eine Schichtdicke der haftungsvermindernden Beschichtung von maximal 6 µm, insbesondere maximal 5 µm, von Vorteil ist.

Das erfindungsgemäße Reibelement wird in der dieses aufweisende Reibbaugruppe vorzugsweise mit zumindest einem weitere Reibelement zu einem Reibpaket, insbesondere einem Lamellenpaket, kombiniert, dessen arithmetischer Mittenrauwert Ra nach DIN EN ISO 4287 ein Wert aufweist, der ausgewählt ist aus einem Bereich mit einer unteren Grenze von 4 µm und einer oberen Grenze von 8 µm. Das weitere Reibelement kann beispielsweise aus (Sinter)Stahl hergestellt sein und weist die entsprechende Oberflächenstruktur auf, die z.B. durch Prägen hergestellt ist. Anstelle von Stahl können aber auch andere Werkstoffe für das weitere Reibelement verwendet werden, wie z.B. Aluminiumlegierungen mit Hartbeschichtungen, wie beispielsweise DLC-Schichten, etc.

Vorzugsweise hat das weitere Reibelement eine Oberflächenhärte, die ausgewählt ist aus einem Bereich mit einer unteren Grenze von HV(1) 180, insbesondere HV(1) 240, und einer oberen Grenze von HV(1) 500, insbesondere HV(1) 350. Diese Härte wird beispielsweise erhalten, indem die Oberfläche des weiteren Reibelementes, also dessen Reibschicht, gasnitriert, nitrooxidiert oder plasmanitriert wird. Die verwendeten Verfahrensparameter zur Herstellung dieser "Hartschichten" entsprechen den üblichen Parametern, wie sie bei Durchführung dieser Verfahren zur Anwendung kommen. Insbesondere kann dabei eine Hartschicht mit einer Härte nach Vickers von mindestens HV(1) zwischen 300 und 1000 erzeugt werden, die eine Schichtdicke von maximal 20 µm aufweisen kann. Der Anteil an Nitriden und gegebenenfalls oxidischen Phasen in dieser Hartschicht kann beispielsweise zwischen 5 Gew.-% und 85 Gew.-% betragen.

Durch den Einsatz des erfindungsgemäßen Reibelementes 1 in Verbindung mit dem genannten Wasser enthaltenden Schmier- und Kühlmittel in Kraftfahrzeugen konnte eine deutliche Reduktion des Kraftstoffverbrauches um 4 % bis 6 % im Vergleich zu herkömmlich ölge-schmierten und ölgekühlten Systemen erreicht werden. Gemessen wurde dies gemäß RL 93/116/EWG. Zudem wies das mit der erfindungsgemäß ausgebildeten Reibschicht 5 versehene Reibelement 1 ein schwingungsfreies Geräuschverhalten mit einer Momentschwingungsamplitude im Bereich von ± 20 % des Reibmomentes auf.

Die Ausführungsbeispiele zeigen bzw. beschreiben mögliche Ausführungsvarianten des Reibelementes 1 und der Reibbaugruppe, wobei an dieser Stelle bemerkt sei, dass die Erfindung nicht auf die speziell dargestellten und beschriebenen Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus Reibelementes 1 dieses bzw. dessen Bestandteile teilweise unmaßstäblich und/oder vergrößert und/oder verkleinert dargestellt wurden.

### Bezugszeichenaufstellung

- 1: Reibelement
- 2: Grundkörper
- 3: Oberfläche
- 4: Oberfläche
- 5: Reibschicht

- 6: Nut
- 7: Segment
- 8: Oberfläche
- 9: Linie
- 10: Linie

- 11: Linie
- 12: Bereich
- 13: Bereich
- 14: Wellental
- 15: Spitze

## Patentansprüche

1. Reibbaugruppe umfassend ein Reibelement (1) und ein weiteres Reibelement, die mit einander in Wirkverbindung bringbar sind, wobei das.Reibelement (1) einen Grundkörper (2) mit einer Reibschicht (5) umfasst, die einen arithmetischen Mittenrauwert Ra nach DIN EN ISO 4287 von mindestens 3 µm aufweist, **dadurch gekennzeichnet, dass** die Reibschicht (5) eine Wellentiefe Wt nach DIN EN ISO 4287 von mindestens 30 µm und eine mittlere Rillenbreite RSm nach DIN EN ISO 4287 von mindestens 150 µm aufweist, und dass das Reibelement (1) und das weitere Reibelement mit einem wasserbasierenden, Festschmierstoffpartikel enthaltenden Schmiermittel geschmiert sind.

2. Reibbaugruppe nach Anspruch 1, **dadurch gekennzeichnet, dass** die Reibschicht (5) durch einen Reibbelag gebildet ist.

3. Reibbaugruppe nach Anspruch 1 oder 2, **dadurch gekennzeichnet, dass** die Reibschicht (5) einen Reibwert gegen Stahl unter Benetzung mit einem Wasser/Glykol-Gemisch aufweist, der ausgewählt ist aus einem Bereich mit einer unteren Grenze von 0,06 ± 10 % und einer oberen Grenze von 0,4 ± 10 %.

4. Reibbaugruppe nach einem der Ansprüche 1 bis 3, **dadurch gekennzeichnet, dass** die Reibschicht (5) eine Kompressibilität gemäß aufweist, die ausgewählt ist aus einem Bereich mit einer unteren Grenze von 5 % und einer oberen Grenze von 50 %.

5. Reibbaugruppe nach einem der Ansprüche 1 bis 4, **dadurch gekennzeichnet, dass** die Reibschicht (5) ein freies Volumen von zumindest 20 % aufweist.

6. Reibbaugruppe nach Anspruch 5, **dadurch gekennzeichnet, dass** die Poren der Reibschicht (5) eine Porengröße aufweisen, ausgewählt aus einem Bereich mit einer unteren Grenze von 20 µm und einer oberen Grenze von 900 µm.

7. Reibbaugruppe nach einem der Ansprüche 1 bis 6, **dadurch gekennzeichnet, dass** die Reibschicht (5) einen Festschmierstoffanteil, insbesondere einen Graphitanteil, von mindestens 5 Gew.-% aufweist.

8. Reibbaugruppe nach Anspruch 7, **dadurch gekennzeichnet, dass** der Festschmierstoffanteil des Reibbelages ausgewählt ist aus einem Bereich mit einer unteren Grenze von 5 Gew.-% und einer oberen Grenze von 50 Gew.-%.

9. Reibbaugruppe nach Anspruch 7 oder 8, **dadurch gekennzeichnet, dass** die Festschmierstoffpartikel eine maximale Korngröße von 500 µm aufweist.

10. Reibbaugruppe nach einem der Ansprüche 1 bis 9, **dadurch gekennzeichnet, dass** die Reibschicht (5) mit einer haftungsvemindernden Beschichtung versehen ist.

11. Reibbaugruppe nach einem der Ansprüche 1 bis 10, **dadurch gekennzeichnet, dass** eine Kontaktfläche, die in direktem Kontakt mit dem weiteren Reibelement in der Verwendung steht, maximal 40 % der Gesamtfläche der Reibschicht (5) beträgt.

12. Reibbaugruppe nach einem der Ansprüche 1 bis 11, **dadurch gekennzeichnet, dass** das weitere Reibelement einen arithmetischen Mittenrauwert Ra nach DIN EN ISO 4287 aufweist, der ausgewählt ist aus einem Bereich mit einer unteren Grenze von 4 µm und einer oberen Grenze von 8 µm.

13. Reibbaugruppe nach einem der Ansprüche 1 bis 12, **dadurch gekennzeichnet, dass** das weitere Reibelement eine Oberflächenhärte HV(1) aufweist, die ausgewählt ist aus einem Bereich mit einer unteren Grenze von 180 und einer oberen Grenze von 600.

14. Reibbaugruppe nach Anspruch 13, **dadurch gekennzeichnet, dass** das weitere Reibelement mit einer Hartschicht mit einer Härte nach Vickers von mindestens HV(1) 300 versehen ist.

15. Verwendung eines Reibelementes (1) das einen Grundkörper (2) mit einer Reibschicht (5) umfasst, die einen arithmetischen Mittenrauwert Ra nach DIN EN ISO 4287 von mindestens 3 µm, eine Wellentiefe Wt nach DIN EN ISO 4287 von mindestens 30 µm und eine mittlere Rillenbreite RSm nach DIN EN ISO 4287 von mindestens 150 µm aufweist, in einer Reibbaugruppe, die neben dem Reibelement (1) ein weiteres Reibelement umfasst, wobei das Reibelement (1) und das weitere Reibelement mit einem wasserbasierenden, Festschmierstoffpartikel enthaltenden Schmiermittel geschmiert sind.

## Claims

1. A friction assembly, comprising a friction element (1) and a further friction element which are operatively connectable to each other, wherein the friction element (1) comprises a main body (2) having a friction layer (5) which has a mean arithmetic roughness value Ra according to DIN EN ISO 4287 of at least 3 µm, **characterized in that** the friction layer (5) has a wave trough depth Wt according to DIN EN ISO 4287 of at least 30 µm and a mean groove width RSm according to DIN EN ISO 4287 of at least 150 µm, and that the friction element (1) and the further friction element are lubricated with a water-based lubricant containing solid lubricant particles.

2. The friction assembly according to claim 1, **characterized in that** the friction layer (5) is formed by a friction lining.

3. The friction assembly according to claim 1 or 2, **characterized in that** the friction layer (5) has a coefficient of friction against steel when wetted with a water/glycol mixture which is selected from a range with a lower limit of 0.06 ± 10 % and an upper limit of 0.4 ± 10 %.

4. The friction assembly according to any one of claims 1 to 3, **characterized in that** the friction layer (5) has a compressibility, which is selected from a range with a lower limit of 5 % and an upper limit of 50 %.

5. The friction assembly according to any one of claims 1 to 4, **characterized in that** the friction layer (5) has a free a free volume of at least 20 %.

6. The friction assembly according to claim 5, **characterized in that** the pores of the friction layer (5) have a pore size which is selected from a range with a lower limit of 20 µm and an upper limit of 900 µm.

7. The friction assembly according to any one of claims 1 to 6, **characterized in that** the friction layer (5) comprises a proportion of solid lubricant, in particular a proportion of graphite, of at least 5 wt.%.

8. The friction assembly according to claim 7, **characterized in that** the proportion of solid lubricant in the friction lining is selected from a range with a lower limit of 5 wt.% and an upper limit of 50 wt.%.

9. The friction assembly according to claim 7 or 8, **characterized in that** the solid lubricant particles have a maximum grain size of 500 µm.

10. The friction assembly according to any one of claims 1 to 9, **characterized in that** the friction layer (5) is provided with an adhesion-reducing coating.

11. The friction assembly according to any one of claims 1 to 10, **characterized in that** a contact area, which is in direct contact with an additional friction element when in use, is a maximum of 40 % of the total area of the friction layer (5).

12. The friction assembly according to any one of claims 1 to 11, **characterized in that** the additional friction element has a mean arithmetic average roughness value Ra according to DIN EN ISO 4287, which is selected from a range with a lower limit of 4 µm and an upper limit of 8 µm.

13. The friction assembly according to any one of claims 1 to 12, **characterized in that** the additional friction element has a surface hardness HV(1) which is selected from a range with a lower limit of 180 and an upper limit of 600.

14. The friction assembly according to claim 13, **characterized in that** the additional friction element is provided with a hard layer having a Vickers hardness of at least HV(1) 300.

15. A use of a friction element (1) comprising a main body (2) with a friction layer (5) which has a mean arithmetic roughness value Ra according to DIN EN ISO 4287 of at least 3 µm, a wave trough depth Wt according to DIN EN ISO 4287 of at least 30 µm and a mean groove width RSm according to DIN EN ISO 4287 of at least 150 µm, in a friction assembly which comprises a further friction element in addition to the friction element (1), wherein the friction element (1) and the further friction element are lubricated with a water-based lubricant containing solid lubricant particles.

## Revendications

1. Sous-ensemble de friction comprenant un élément de friction (1) et un autre élément de friction, qui peuvent être amenés en liaison fonctionnelle l'un avec l'autre, l'élément de friction (1) comprenant un corps de base (2) avec une couche de friction (5), qui présente une rugosité arithmétique Ra selon DIN EN ISO 4287 d'au moins 3 µm, **caractérisé en ce que** la couche de friction (5) présente une profondeur d'ondulation Wt selon DIN EN ISO 4287 d'au moins 30 µm et une largeur de rainure Rsm selon DIN EN ISO 4287 d'au moins 150 µm et **en ce que** l'élément de friction (1) et l'autre élément de friction sont lubrifiés avec un lubrifiant à base d'eau contenant des particules de lubrifiant solide.

2. Sous-ensemble de friction selon la revendication 1, **caractérisé en ce que** la couche de friction (5) est constituée d'une garniture de friction.

3. Sous-ensemble de friction selon la revendication 1 ou 2, **caractérisé en ce que** la couche de friction (5) présente un coefficient de friction contre l'acier, dans le cas d'une humidification avec un mélange eau/glycol, qui est sélectionné dans un intervalle avec une limite inférieure de 0,06 ± 10 % et une limite supérieure de 0,4 ± 10 %.

4. Sous-ensemble de friction selon l'une des revendications 1 à 3, **caractérisé en ce que** la couche de friction (5) présente une compressibilité qui est sélectionné dans un intervalle avec une limite inférieure de 5 % et une limite supérieure de 50 %.

5. Sous-ensemble de friction selon l'une des revendications 1 à 4, **caractérisé en ce que** la couche de friction (5) présente un volume libre d'au moins 20 %.

6. Sous-ensemble de friction selon la revendication 5, **caractérisé en ce que** les pores de la couche de friction (5) présentent une taille de pore sélectionnée dans un intervalle avec une limite inférieure de 20 µm et une limite supérieure de 900 µm.

7. Sous-ensemble de friction selon l'une des revendications 1 à 6, **caractérisé en ce que** la couche de friction (5) comprend une part de lubrifiant solide, plus particulièrement une part de graphite, d'au moins 5 % en poids.

8. Sous-ensemble de friction selon la revendication 7, **caractérisé en ce que** la part de lubrifiant solide est sélectionnée dans un intervalle avec une limite inférieure de 5 % en poids et une limite supérieure de 50 % en poids.

9. Sous-ensemble de friction selon la revendication 7 ou 8, **caractérisé en ce que** la part de lubrifiant solide présente une taille de grains maximale de 500 µm.

10. Sous-ensemble de friction selon l'une des revendications 1 à 9, **caractérisé en ce que** la couche de friction (5) est munie d'un revêtement réduisant l'adhérence.

11. Sous-ensemble de friction selon l'une des revendications 1 à 10, **caractérisé en ce qu'**une surface de contact, qui est en contact direct avec un autre élément de friction, qui représente au maximum 40 % de la surface totale de la couche de friction (5), est utilisée.

12. Sous-ensemble de friction selon l'une des revendications 1 à 11, **caractérisé en ce que** l'autre élément de friction présente une rugosité moyenne arithmétique Ra selon DIN EN ISO 4287 qui est sélectionné dans un intervalle avec une limite inférieure de 4 µm et une limite supérieure de 8 µm.

13. Sous-ensemble de friction selon l'une des revendications 1 à 12, **caractérisé en ce que** l'autre élément de friction présente une dureté de surface HV(1) qui est sélectionnée dans un intervalle avec une limite inférieure de 180 et une limite supérieure de 600.

14. Sous-ensemble de friction selon la revendication 13, **caractérisé en ce que** l'autre élément de friction est muni d'une couche dure avec une dureté selon Vickers d'au moins HV(1) 300.

15. Utilisation d'un élément de friction (1) qui comprend un corps de base (2) avec une couche de friction (5), qui présente une rugosité moyenne arithmétique selon DIN EN ISO 4287 d'au moins 3 µm, une profondeur d'ondulation Wt selon DIN EN ISO 4287 d'au moins 30 µm et une largeur de rainure moyenne RSm selon DIN EN ISO 4287 d'au moins 150 µm, dans un sous-ensemble de friction, qui comprend, en plus de l'élément de friction (1), un autre élément de friction, l'élément de friction (1) et l'autre élément de friction étant lubrifiés avec un lubrifiant à base d'eau contenant des particules de lubrifiant solide.
